# EUROPÄISCHE PATENTANMELDUNG

(11) **EP 1 217 703 A1**
(43) Veröffentlichungstag der Anmeldung: **26.06.2002**
(21) Anmeldenummer: 01129814.8
(22) Anmeldetag: 14.12.2001
(51) Int. Cl.: H02B 1/28, H02G 3/22

(54) **Steuerkasten für einen Aufzug**

(30) Priorität: 22.12.2000 EP 00811234
(71) Anmelder: INVENTIO AG, CH-6052 Hergiswil (CH)
(72) Erfinder: Clouet, Christophe, 77350 Le Mee s/Seine (FR); Aubry, William, 77000 Melun (FR)

(57) **Zusammenfassung**

Um zu vermeiden, dass ein Kabelbrand im Steuerkasten (4) sich in den Aufzugschacht (2) ausbreitet, weist der erfindungsgemässe Steuerkasten (4), welcher in einer Wand (1) eines Aufzugschachts (2) eingebaut ist, eine Öffnung (5) auf, durch welche ein Kabel (3) geführt ist. Zudem weist der Steuerkasten (4) ein feuerfestes Element (6) auf, welches das Kabel (3) im Bereich der Öffnung (5) umgibt.

## Beschreibung

Die Erfindung betrifft einen Steuerkasten für einen Aufzug.

Aus dem Stand der Technik EP 0 680 921 B1 ist ein Steuerkasten für einen Aufzug bekannt, der auf dem Stockwerk in einer Wand des Aufzugsschachts eingebaut ist. Zwar ist am Steuerkasten eine feuerfeste Türe vorgesehen, welche die elektrischen Baugruppen des Steuerkastens vor einem Brand auf dem Stockwerk und das Stockwerk vor einem Brand im Steuerkasten schützt, aber bei einem Brand im Steuerkasten wird nicht verhindert, dass sich der Brand in den Schacht, in dem sich die Kabine bewegt, ausbreitet. Dadurch ist nicht gewährleistet, dass bei einem Brand im Steuerkasten, die im Schacht oder in der Kabine befindlichen Personen ausreichend geschützt sind. Diese Ausführungsform genügt daher den sicherheitstechnischen Erfordernissen nicht vollumfänglich.

Eine Aufgabe der Erfindung ist es daher einen Steuerkasten für einen Aufzug anzugeben, bei dem mit ausreichender Sicherheit gewährleistet ist, dass ein Brand im Steuerkasten, insbesondere ein Kabelbrand, sich nicht in den Schachtraum ausbreiten kann.

Die Aufgabe wird durch die im Patentanspruch 1 angegebenen Merkmale gelöst.

So weist der erfindungsgemässe Steuerkasten für einen Aufzug, welcher in einer Wand eines Aufzugsschachts vorgesehen ist, eine Öffnung auf, durch welche ein Kabel geführt ist. Zudem weist der Steuerkasten ein feuerfestes Element auf, welches das Kabel im Bereich der Öffnung umgibt.

Vorteilhafte Weiterbildungen der Erfindung ergeben sich aus den in den abhängigen Patentansprüchen angegebenen Merkmalen.

So ist es gemäss Patentanspruch 2 insbesondere von Vorteil, die Öffnung im unteren Bereich des Steuerkastens vorzusehen, weil dadurch die Brandausbreitung weiter reduziert werden kann.

Weiterhin ist es gemäss Patentanspruch 3 von Vorteil, das feuerfeste Element aus Keramikfaser, Steinwolle, Glaswolle, einer Silikatverbindung oder Gips auszubilden. Dadurch wird eine ausreichende Feuerschutzisolierung gewährleistet.

Um die Feuerschutzisolierung weiter zu erhöhen, kann gemäss Patentanspruch 4 vorteilhafterweise das Kabel vom feuerfesten Element dicht umschlossen sein.

Zusätzlich ist es entsprechend Patentanspruch 5 von Vorteil, zwei Spannelemente und eine Spannvorrichtung vorzusehen, wobei das feuerfeste Element zwischen den zwei Spannelementen mittels der Spannvorrichtung eingespannt ist. Dadurch umschliesst das feuerfeste Element das Kabel dicht, wodurch eine hohe Feuerschutzisolierung erreicht wird.

Die Spannvorrichtung kann vorteilhafterweise eine Schraube und eine Mutter aufweisen.

Zusätzlich ist es entsprechend Patentanspruch 7 von Vorteil, wenn der Steuerkasten einen Fuss aufweist, wobei die Schraube als Bestandteil der Spannvorrichtung zusätzlich als Fuss dient.

Der Steuerkasten kann vorteilhafterweise gemäss Patentanspruch 8 auf dem Boden in einer Vertiefung stehen.

Gemäss Patentanspruch 9 kann das Kabel ein elektrisches Kabel oder ein Kabel zum Betätigen einer Bremse sein.

Schliesslich kann es gemäss Patentanspruch 10 auch von Vorteil sein, die Öffnung im oberen Bereich des Steuerkastens vorzusehen. Dadurch kann die Kabelführung im Schacht optimiert werden.

Im folgenden wird die Erfindung anhand mehrerer Figuren weiter erläutert.
- Figur 1: zeigt einen mit elektronischen Baugruppen bestückten Steuerkasten gemäss der Erfindung.
- Figur 2: zeigt eine erste mögliche Anordnung des Steuerkastens im Stockwerksbereich.
- Figur 3: zeigt eine zweite mögliche Anordnung des Steuerkastens im Stockwerksbereich.
- Figur 4: zeigt den Steuerkasten mit einer oberen Öffnung, durch welche ein Kabel zum Betätigen einer Bremse geführt ist.
- Figur 5: zeigt den Steuerkasten im Querschnitt mit einer oberen Öffnung, durch welche ein Kabel geführt ist.
- Figur 6: zeigt den unteren Bereich des Steuerkastens im Querschnitt mit einer Öffnung, durch welche ein Kabel geführt ist.
- Figur 7: zeigt einen Ausschnitt aus Figur 6 in der Draufsicht.
- Figur 8: zeigt den Steuerkasten im Querscnitt in der Draufsicht.

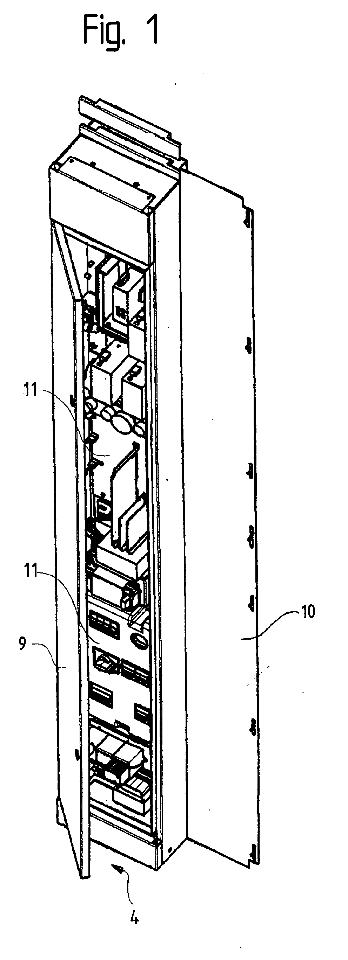

In Figur 1 ist der gesamte Steuerschrank 4 gezeigt. Über eine Tür 9 des Steuerschranks 4 kann sich das Servicepersonal Zugang zu elektronischen Baugruppen 11 im Steuerschrank 4 verschaffen. In der Regel wird sich die Tür 9 des Steuerschranks 4 zum Stockwerk hin öffnen lassen, so dass die elektronischen Baugruppen 11 vom Stockwerk aus leicht zugänglich sind. Mittels eines Anschlussblechs 10 kann der Steuerschrank 4 beispielsweise mit dem Rahmen der Schachttüre verbunden werden.

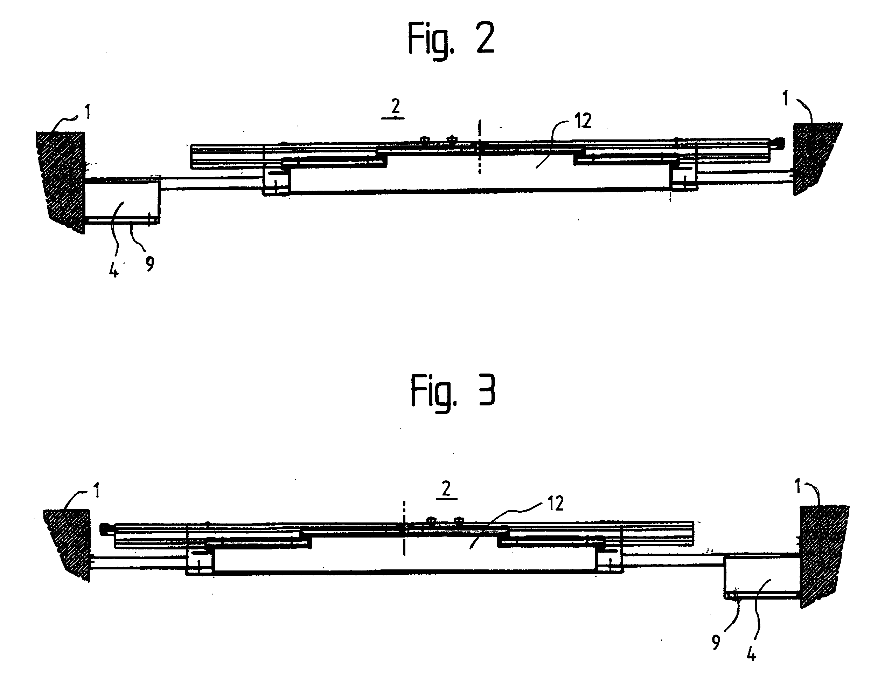

In Figur 2 ist der Steuerschrank 4 vom Stockwerk aus betrachtet auf der linken Seite der Schachttüre 12 angeordnet. Der Steuerkasten 4 befindet sich auf dem Stockwerk und trennt den Aufzugschacht 2 vom Stockwerk ab. Die elektrischen und elektronischen Baugruppen sind vom Stockwerk aus über die Tür 9 zugänglich. Der Steuerkasten 4 ist einerseits mit der Schachtwand 1 und andererseits mit dem Rahmen der Schachttüre 12 verbunden. Der Steuerkasten 4 ist dabei derart angeordnet, dass die Schachtwandöffnung, in welcher der Steuerkasten 4 und die Schachttüre 12 Platz finden, minimale Dimensionen aufweist. Die Schachtwandöffnung muss dabei lediglich so breit gewählt werden, dass sich die Schachttüre 12 ungehindert öffnen lässt. Der Steuerkasten 4 wird derart in der Schachtwandöffnung platziert, dass sich die Schachttüre 12 im geöffneten Zustand hinter dem Steuerkasten 4 befindet.

In Figur 2 ist als Schachttüre 12 eine zentral öffnende vierflügelige Teleskoptüre gezeigt. Der Steuerkasten 4 ist jedoch grundsätzlich auch bei anderen Typen von Schachttüren einsetzbar.

Bei der in Figur 3 gezeigten Ausführungsform gilt im wesentlichen das gleiche wie für die in Figur 2 gezeigte Ausführungsform. Lediglich der Steuerkasten 4 ist bei der in Figur 3 gezeigten Ausführungsform auf der anderen Seite der Schachtwandöffnung angeordnet.

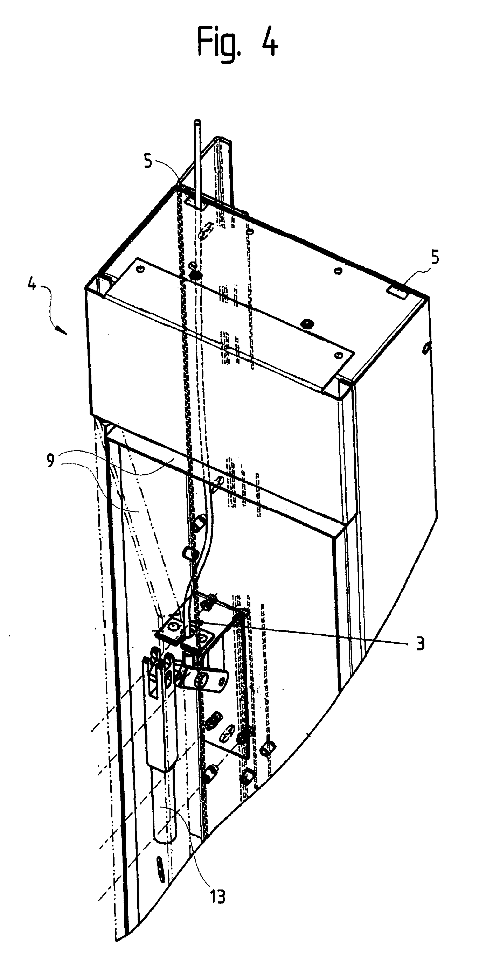

In Figur 4 ist der Steuerkasten 4 in einer dreidimensionalen Ansicht mit Öffnungen 5 im oberen Bereich gezeigt. Nach dem Öffnen der Tür 9 des Steuerkastens 4 wird ein Hebel 13 zum Lüften einer Bremse zugänglich. Der Hebel 13 zum Lüften der Bremse des Aufzugs ist mit einem Kabel 3 verbunden. Das Kabel 3 kann beispielsweise ein Bowdenzug sein. Die beim Betätigen des Hebels 13 aufgebrachte Kraft wird über das Kabel 3 auf die an der Antriebseinheit des Aufzugs angeordnete Bremse übertragen, um manuell die Bewegung der Aufzugskabine zu steuern. Das Kabel 3 wird durch eine Öffnung 5 im Deckel des Steuerkastens 4 aus dem Steuerkasten 4 heraus in den Schachtraum 2 geführt. Der Steuerkasten 4 in Figur 4 weist im Deckel eine zweite Öffnung 5, die optional sein kann, auf. Anstelle oder auch zusätzlich zum Bowdenzug kann auch ein elektrisches Kabel durch die Öffnung 5 geführt werden.

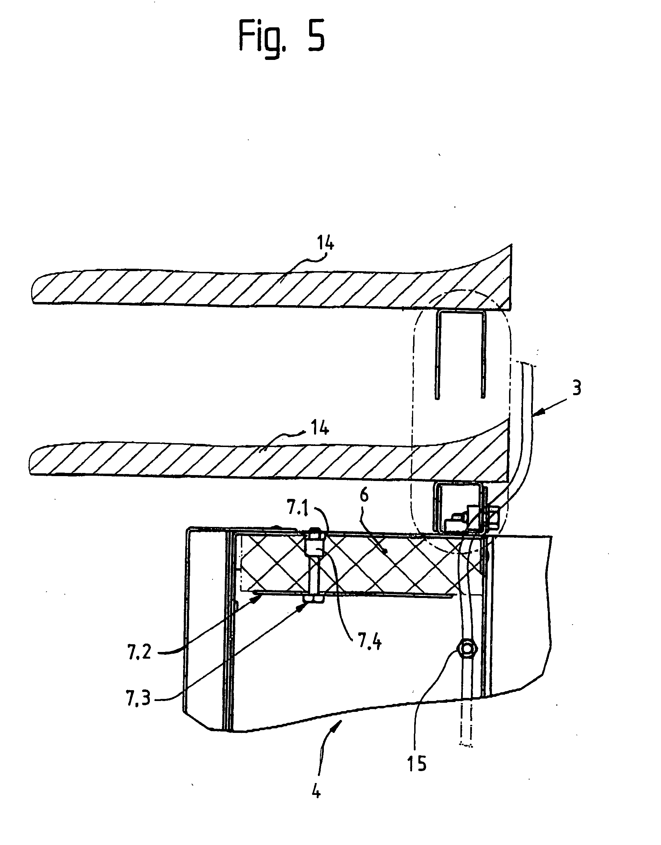

In der Figur 5 ist der obere Bereich des Steuerkastens 4 in Verbindung mit einem Deckenanschlusselement 14 im Querschnitt gezeigt. Nachdem der Steuerkasten 4 auf den Stockwerksboden gesetzt ist und das Kabel 3 durch die Öffnung 5 des Steuerkastens 4 aus dem Steuerkasten 4 heraus in den Aufzugsschacht 2 geführt ist, wird das Deckenanschlusselement 14, auch Abschlussblende genannt, wie in Figur 5 gezeigt, eingesetzt und mit dem Steuerkasten 4 verschraubt. Das Kabel 3 kann mittels eines Fixierelements 15 im Steuerkasten 4 fixiert sein.

Ein feuerfestes Element 6, beispielsweise eine Keramikfasermatte, eine Steinwollmatte, eine Glaswollmatte, eine Matte aus einer Silikatverbindung oder Gips wird im oberen Bereich des Steuerkastens 4 zur Feuerisolierung im Steuerkasten 4 eingebaut.

Um das feuerfeste Element 6 in seiner Position zu halten und leicht vorzuspannen, so dass es das Kabel 3 vollständig dicht umschliesst, kann das feuerfeste Element 6 mittels einem ersten Spannelement 7.1, einem zweiten Spannelement 7.2 und einer Schraube 7.3 und einer Mutter 7.4 gehalten werden. Über die Schraube 7.3 kann die Vorspannung im feuerfesten Element 6 eingestellt werden. Das zweite Spannelement 7.2 kann ein Blechstreifen, eine Blechplatte oder dergleichen sein, um eine flächige Verteilung der durch die Schraube 7.3 erzeugten Vorspannkraft zu erreichen. Das erste Spannelement 7.1 ist in der Regel ein Blechstreifen, der den Deckel des Steuerkastens 4 bildet. Die Mutter 7.4 dient als Gegenstück zur Schraube 7.3.

Die Verwendung einer Keramikfasermatte als feuerfestes Element 6 zur Feuerschutzisolierung hat den Vorteil, dass diese auch unter hoher Temperatur ihre mechanischen Eigenschaften nicht verliert. Weithin hat die Keramikfasermatte den Vorteil, dass sie komprimierbar ist. Dadurch wird verhindert, dass Gase durch die Öffnung 5 des Steuerkastens 4 durchziehen können. Schliesslich hat die Keramikfaserplatte den Vorteil, dass sie einfach einzubringen ist, ohne dass das Material bricht.

Die Grösse des Keramikfasermatte hängt von der Grösse des Steuerkastens ab. In der Regel dürfte eine drei cm starke feuerfeste Isolierung ausreichen.

Vorteilhafterweise befindet sich die Öffnung 5 im Steuerkasten 4 zur Durchführung des Kabels 3 im Boden oder im Deckel des Steuerkastens 4, da die Kabeldurchführung vom Steuerkasten heraus in den Schacht bei einer Öffnung 5 in der Rückwand des Steuerkastens 4 schwieriger abzudichten ist.

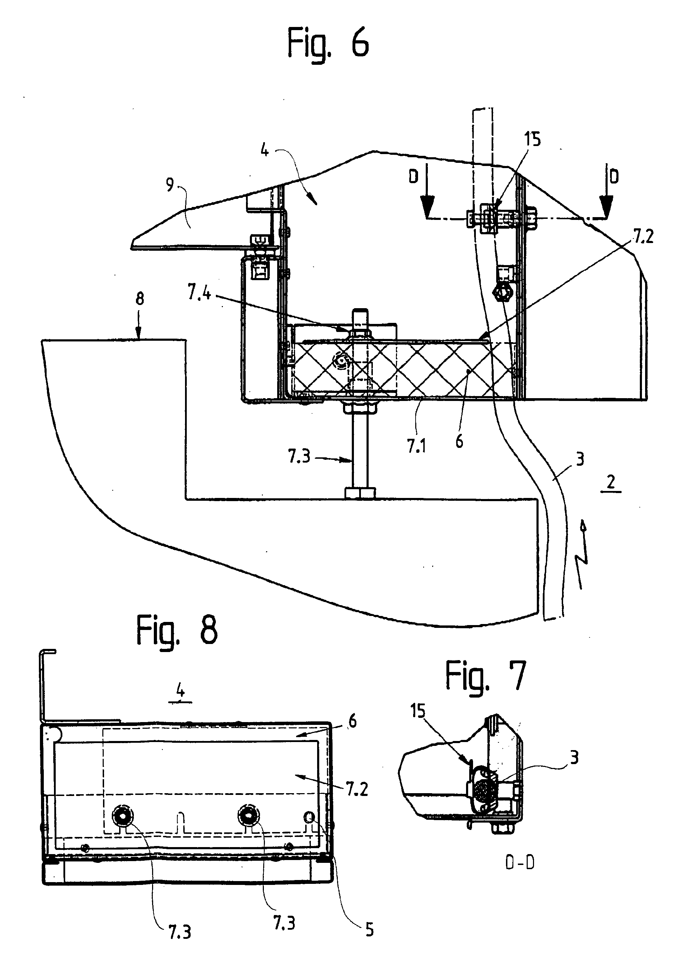

Bei der in Figur 6 gezeigten Ausführungsform ist der untere Bereich des Steuerkastens 4 im Querschnitt gezeigt. Der Steuerkasten 4 steht mit Füssen, welche durch die Schrauben 7.3 gebildet sind, auf dem Stockwerksboden 8.

Vorteilhafterweise steht der Steuerkasten 4 in einer Vertiefung auf dem Stockwerksboden. Die Vertiefung beträgt zirka zehn cm, damit das Kabel 3 unterhalb der Aluminiumschiene in den Schacht 2 geführt werden kann. Die Schraube 7.3 dient als Fuss und zusätzlich als zweites Spannelement, welches mit dem ersten Spannelement 7.1 und dem zweiten Spannelement 7.2 und der Mutter 7.4 zum Komprimieren des feuerfesten Elements 6 dient.

Die Öffnung 5 im Steuerkasten 4 ist vorteilhafterweise gerade so gross gewählt, dass das Kabel 3 bequem durch die Öffnung 5 geführt werden kann.

Mit dem Fixierelement 15 wird das Kabel 3 im Steuerkasten 4 fixiert.

In Figur 7 ist ein Schnitt D-D durch den Steuerkasten 4 gezeigt. Die Lage des Schnitts ist auf Figur 6 entnehmbar. Das Fixierelement 15 kann beispielsweise ein Kabelbinder sein. Selbstverständlich können zur Befestigung und Vorspannung des feuerfesten Elements 6 zusätzliche Spannelemente 7.1, 7.2, Muttern 7.4 und Schrauben 7.3 verwendet werden.

Die Verwendung mehrerer Schrauben 7.3 hat gerade im unteren Bereich des Steuerkastens 4 den Vorteil, dass dieser dadurch auf mehreren Füssen und damit stabiler steht.

In Figur 8 ist die Draufsicht auf den unteren Bereich des Steuerkastens 4 im Schnitt dargestellt. Das Anschlussblech 10, wie es in Figur 1 gezeigt ist, ist bei der in Figur 8 gezeigten Ausführungsform nicht vorhanden. Wie aus Figur 8 ersichtlich ist, ist es nicht notwendig, dass das feuerfeste Element 6 den gesamten Bodenbereich des Steuerkastens 4 bedeckt. Es ist lediglich sicherzustellen, dass das feuerfeste Element im Bereich der Öffnungen 5 ausreichend vorhanden ist, um das Kabel 3, welches durch die Öffnung 5 durchgeführt ist, zu umschliessen.

### Bezügszeichenliste

- 1: Wand
- 2: Aufzugschacht
- 3: Kabel
- 4: Steuerkasten
- 5: Öffnung im Steuerkasten
- 6: feuerfestes Element
- 7.1: erstes Spannelement
- 7.2: zweites Spannelement
- 7.3: Schraube
- 7.4: Mutter
- 8: Boden
- 8.1: Vertiefung im Boden
- 9: Tür des Steuerkastens
- 10: Anschlussblech
- 11: elektronische Baugruppen
- 12: Schachttüre
- 13: Hebel zum Bremslüften
- 14: Deckenanschlusselement
- 15: Fixierelement

## Patentansprüche

1. Steuerkasten für einen Aufzug,
welcher in einer Wand (1) eines Aufzugschachts (2) vorgesehen ist,
welcher eine Öffnung (5) aufweist, durch welche ein Kabel (3) geführt ist, und
welcher ein feuerfestes Element (6) aufweist, welches das Kabel (3) im Bereich der Öffnung (5) umgibt.

2. Steuerkasten nach Patentanspruch 1,
welcher einen unteren Bereich aufweist, wobei die Öffnung (5) im unteren Bereich vorgesehen ist.

3. Steuerkasten nach Patentanspruch 1 oder 2,
wobei das feuerfeste Element (6) eine Keramikfaser, Steinwolle, Glaswolle, eine Silikatverbindung oder Gips aufweist.

4. Steuerkasten nach einem der vorigen Patentansprüche,
wobei das Kabel (3) vom feuerfesten Element (6) dicht umschlossen ist.

5. Steuerkasten nach einem der vorigen Patentansprüche, welcher zwei Spannelemente (7.1, 7.2) und eine Spannvorrichtung (7.3, 7.4) aufweist,
wobei das feuerfeste Element (6) zwischen den zwei Spannelementen (7.1, 7.2) mittels der Spannvorrichtung (7.3, 7.4) eingespannt ist.

6. Steuerkasten nach einem der vorigen Patentansprüche,
wobei die Spannvorrichtung (7.3, 7.4) eine Schraube (7.3) und eine Mutter (7.4) aufweist.

7. Steuerkasten nach Patentanspruch 6,
welcher einen Fuss aufweist,
wobei die Schraube (7.3) zusätzlich als Fuss dient.

8. Steuerkasten nach einem der vorigen Patentansprüche,
welcher auf einem Boden (8) in einer Vertiefung (8.1) steht.

9. Steuerkasten nach einem der vorigen Patentansprüche,
wobei das Kabel (3) ein elektrisches Kabel oder ein Kabel zum Betätigen einer Bremse ist.

10. Steuerkasten nach einem der vorigen Patentansprüche,
wobei die Öffnung (5) im oberen Bereich des Steuerkastens (4) vorgsehen ist.
